# EUROPEAN PATENT APPLICATION

(11) **EP 4 456 187 A1**
(43) Date of publication of application: **30.10.2024**
(21) Application number: 22911778.3
(22) Date of filing: 15.12.2022
(51) Int. Cl.: H01M 4/36, H01M 4/62, H01M 4/525, H01M 4/505, H01M 10/052, H01M 10/0562, H01M 4/02

(54) **CATHODE ACTIVE MATERIAL FOR ALL SOLID BATTERY, AND MANUFACTURING METHOD THEREFOR**

(30) Priority: 22.12.2021 KR 20210185086
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: MOON, Ji Woong, Pohang-si, Gyeongsangbuk-do 37685 (KR); EUN, Tai Hee, Pohang-si, Gyeongsangbuk-do 37671 (KR); PARK, Yooncheol, Busan 48309 (KR); SONG, Jung Hoon, Gwacheon-si, Gyeonggi-do 13835 (KR); YUN, Jeongsik, Busan 48309 (KR); NAM, Sang Cheol, Seoul 02587 (KR)
(74) Representative: Pfenning, Meinig & Partner mbB
(86) International application number: PCT/KR2022/020499
(87) International publication number: WO 2023/121145

(57) **Abstract**

A positive electrode active material for an all-solid-state battery of the present exemplary embodiments may include: a core including a lithium nickel-based oxide; a first coating layer containing cobalt which is placed on a surface of the core; and a second coating layer containing a lithium transition metal oxide which is placed on a surface of the first coating layer.

## Description

### [Technical Field]

The present exemplary embodiments relate to a positive electrode active material for an all-solid-state battery and a method of manufacturing the same. More particularly, the present exemplary embodiments relate to a positive electrode active material for an all-solid-state battery including a first coating layer which improves electron conductivity on a lithium nickel-based oxide surface and a second coating layer which prevents an interfacial reaction, and a method of manufacturing the same.

### [Background Art]

Recently, as a demand for an increased mileage of electric vehicles and safety improvement is increased in a lithium battery market, it becomes very important to develop a lithium secondary battery having excellent safety and high weight and volume energy density. In particular, since an energy capacity applied to electric vehicles is tens of kwh and there is a high possibility of large fires and explosions in case of battery damage, a study to replace a liquid electrolyte with a solid electrolyte is actively in progress. In particular, in an all-solid-state battery, a structure in which a solid electrolyte is applied as a secondary electrolyte forming a lithium ion conduction path inside a positive electrode is mainly adopted for manufacturing convenience, and since a sulfide-based solid electrolyte has high ion conductivity and is easily deformed by pressure to have higher density, it is studied a lot. As a positive electrode active material which is mixed with a sulfide-based solid electrolyte and used in a positive electrode, recently, an oxide-based positive electrode active material having a NCM-based or NCA-based layered structure with 80% or more of Ni is being mainly used, identically to a lithium ion battery. However, since the all-solid-state battery having the structure has a high tendency of a sulfide-based solid electrolyte and a layered oxide positive electrode active material to form a reaction layer in an interface, a study for improving performance by coating LiZrOs or LiNbO₃ for preventing a reaction on the surface of a positive electrode active material continues to progress.

When a sulfide-based solid electrolyte and a NCM-based positive electrode active material are applied to a positive electrode, an increase in resistance by production of a high-resistant reaction layer due to movement of Ni and Co in an interface between a positive electrode active material and a sulfide is the most important factor. To date, in the study, a method of uniformly coating a surface of a NCM or NCA layered oxide positive electrode active material with an ion conductive reaction prevention layer capable of suppressing an interfacial reaction such as LiNbO₃ and Li₂ZrO₃ by a method such as a fluid bed coating has been mainly applied. However, as a Ni content is increased, the surface of the NCM and NAC-based layered structure oxide positive electrode active material becomes unstable and the thickness of a residual lithium layer is increased, the positive electrode active material acts as a resistant component which prevents contact between a solid electrolyte and a positive electrode active material, and thus, it is difficult to implement a sufficient initial capacity as a Ni content increases.

Therefore, there is a need to develop a method of manufacturing a positive electrode active material for an all-solid-state battery, which is characterized in that both capacity and capacity retention properties are improved by firstly applying a coating for controlling a residual lithium layer on a lithium nickel-based core surface and then secondarily coating LiNbO₃ and/or Li₂ZrO₃ for preventing a reaction in an interface between a sulfide-based solid electrolyte and a lithium nickel-based core.

### [Disclosure]

### [Technical Problem]

The present disclosure attempts to provide a positive electrode active material for an all-solid-state battery including a first coating layer which controls formation of a residual lithium layer on a lithium nickel-based core surface and a second coating layer which prevents occurrence of an interfacial reaction in an interface between a solid electrolyte and a lithium nickel-based core.

The present disclosure also attempts to provide a method of manufacturing a positive electrode active material for an all-solid-state battery including a first coating layer which controls formation of a residual lithium layer on a lithium nickel-based core surface and a second coating layer which prevents occurrence of an interfacial reaction in an interface between a solid electrolyte and a lithium nickel-based core.

### [Technical Solution]

An exemplary embodiment of the present disclosure provides a positive electrode active material for an all-solid-state battery including: a core including a lithium nickel-based oxide; a first coating layer containing cobalt which is placed on a surface of the core; and a second coating layer containing a lithium transition metal oxide which is placed on a surface of the first coating layer.

The core including a lithium nickel-based oxide may be a NCM-based or NCA-based layered lithium nickel-based oxide.

A cobalt content in the first coating layer may be in a range of 0.5 wt% to 5 wt%.

In addition, a weight ratio of the first coating layer to the core may be in a range of 100:0.5 to 100:5, and the first coating layer may have a thickness in a range of 0.005 µm to 0.05 µm.

In addition, the second coating layer may include a lithium oxide including one or more of zirconium, niobium, or a combination thereof.

The second coating layer may be included in a range of 0.1 wt% to 2 wt% based on a weight of the positive electrode active material, and may have a thickness in a range of 0.005 µm to 0.05 µm.

Another exemplary embodiment of the present disclosure provides a method of manufacturing a positive electrode active material for an all-solid-state battery including: obtaining an intermediate in which a surface of a lithium nickel-based oxide is coated with a first coating layer containing cobalt;
coating a surface of the intermediate with a second coating layer containing a lithium transition metal oxide to obtain a product; and vacuum drying and then firing the product to obtain a positive electrode active material.

In the obtaining of an intermediate in which a first coating layer containing cobalt is formed on a surface of a lithium nickel-based oxide, a mixed solution of a dispersion in which the lithium nickel-based oxide is dispersed in water and a cobalt salt aqueous solution is spray dried, thereby obtaining an intermediate in which the first coating layer containing cobalt is formed.

The cobalt salt may include one or more of cobalt nitrate, cobalt hydroxide, cobalt oxide, or a combination thereof.

In addition, in the forming of a second coating layer containing a lithium transition metal oxide on a surface of the intermediate to obtain a product, the lithium transition metal oxide may include a lithium oxide including one or more of zirconium, niobium, or a combination thereof.

The vacuum drying and then firing of the product to obtain a positive electrode active material may include vacuum drying and drying at normal pressure, and the vacuum drying may be performed at two or more vacuum degrees having a stepwise vacuum degree gradient.

In addition, the vacuum drying may be performed at a vacuum degree in a range of 200 torr to 10 torr.

### [Advantageous Effects]

According to the present exemplary embodiment, high capacity and capacity retention properties of an all-solid-state battery may be improved, by improving electron conductivity between a positive electrode active material and a solid electrolyte to prevent formation of a residual lithium layer on a surface of a positive electrode active material surface and also suppressing an interfacial reaction between a positive electrode active material and a solid electrolyte to prevent an increase in resistance.

### [Description of the Drawings]

FIG. 1 is a schematic diagram of a positive electrode active material for an all-solid-state battery according to an exemplary embodiment.
FIG. 2 shows a method of manufacturing a positive electrode active material for an all-solid-state battery according to an exemplary embodiment.
FIGS. 3A to 3C are FE-SEM images of a cross-section of the positive electrode active material manufactured in Example 1.
FIG. 4 is a graph showing cycle life characteristics at room temperature of the all-solid-state batteries according to Example 1 and Comparative Examples 1 and 2.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, exemplary embodiments of the present disclosure will be described in detail. However, these are suggested only as an example and the present disclosure is not limited thereby, and the present disclosure is only defined by the scope of the claims described later.

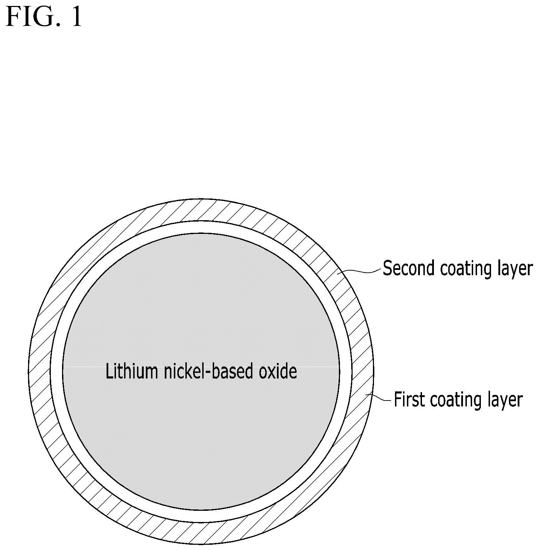

FIG. 1 is a schematic diagram of a positive electrode active material for an all-solid-state battery according to an exemplary embodiment.

Referring to FIG. 1, the positive electrode active material for an all-solid-state battery according to an exemplary embodiment may include a core, a first coating layer, and a second coating layer.

The core may include a lithium nickel-based oxide, specifically a lithium nickel-based oxide having a nickel content of 75 mol% or more, and more specifically, a lithium nickel-based oxide having a nickel content of 80 mol% or more.

In addition, the lithium nickel-based oxide may be one or more layered lithium nickel-based oxides selected from an oxide including Ni, Co, and Mn (hereinafter, referred to as NCM-based), an oxide including Ni, Co, and Al (hereinafter, referred to as NCA-based), or an oxide including Ni, Co, Mn, and Al (hereinafter, referred to as NCMA).

A core including the lithium nickel-based oxide may have an average particle diameter (D50) in a range of 1 µm to 10 µm, specifically 1 µm to 5 µm. When the average particle diameter (D50) of the core including a lithium nickel-based oxide satisfies the above range, in the positive electrode of an all-solid-state battery, the electrolyte solution permeates between the positive electrode active material particles like a conventional liquid electrolyte solution of LiB, so that the entire surface of the positive electrode active material is in contact with the electrolyte solution to make it possible to implement high charge/discharge capacity and high output characteristics, together with an almost perfect ionic conductivity network, however, in an all-solid-state battery, since only a contact interface between sulfide solid electrolyte powder particles and the surface of the positive electrode active material particles is a lithium ion channel between the positive electrode active material and the solid electrolyte, it is difficult to implement the same capacity and output characteristics as those of the liquid electrolyte solution even in the case of using the same NCM-based positive electrode active material. Therefore, under the same average particle diameter and content of the solid electrolyte particles, higher capacity may be implemented and higher output characteristics may be secured when the average particle diameter of the positive electrode active material is small. However, a particulate positive electrode active material increases viscosity of a slurry for manufacturing an electrode plate, and a larger amount of a solvent should be used therefor, but when a large amount of an organic solvent is used in the manufacture of a positive electrode plate, a sulfide solid electrolyte vulnerable to the solvent is damaged more seriously by the solvent. In addition, as the average particle diameter is smaller, a combined density of electrode plates (positive electrode active material + binder + conductive material/ positive electrode volume, mg/cm³) is decreased, so that energy density per unit area and unit volume is decreased.

The first coating layer may be placed on part or all of the surface of the core including a lithium nickel-based oxide. The first coating layer may include a high concentration of cobalt, and the first coating layer may include 0.5 wt% to 3.0 wt% of cobalt based on the weight. When the cobalt content in the first coating layer satisfies the above range, excellent electron conductivity may be secured, and the first coating layer may be prevented from being too thickened.

Meanwhile, a weight ratio of the first coating layer to the core including a lithium nickel-based oxide may be in a range of 100:0.5 to 100:5, specifically 100:1 to 100:3. When the weight ratio between the first coating layer and the core including a lithium nickel-based oxide is less than the above range, the first coating layer is formed too thinly, so that it diffuses into the particles in a subsequent heat treatment process and a performance improvement effect is insignificant.

In addition, the first coating layer may have a thickness in a range of 0.005 µm to 0.05 µm, specifically 0.01 µm to 0.03 µm range. When the thickness of the first coating layer is less than the range, a performance improvement effect is insignificant. In addition, when the first coating layer is thicker than the above range, a material such as Co rather decreases lithium ion conduction properties to increase resistance, and positive electrode active material costs increase due to an increase in use of an expensive material, and thus, it is preferred to have a minimum thickness at which performance improvement is confirmed. In addition, cobalt included in the first coating layer may include one or more of cobalt nitrate, cobalt hydroxide (Co(OH)₂, oxidation cobalt (Co₃O₄, CoO, or Co₃O₄-CoO composite), or a combination thereof.

The second coating layer may be placed on part or all of the surface of the first coating layer.

The second coating layer may include a lithium transition metal oxide, and specifically, may include one or more of zirconium (Zr), niobium (Nb), or a combination thereof.

Meanwhile, the second coating layer may be included in a range of 0.1 wt% to 2 wt%, specifically 0.5 wt% to 1.5 wt% based on the weight of the positive electrode active material. When a weight ratio between the second coating layer and the positive electrode active material is less than the range, the second coating layer is formed too thinly, so that the function of the coating layer is not expressed well. In addition, when the weight ratio between the second coating layer and the positive electrode active material is more than the above range, the second coating layer is formed too thinly, which may affect expression of the function of the coating layer.

In addition, the second coating layer may have a thickness in a range of 0.005 µm to 0.05 µm, specifically 0.01 µm to 0.03 µm. When the thickness of the second coating layer is less than the range, it may not function as a coating layer. In addition, when the second coating layer is thicker than the above range, the functional expression of the core may be hindered.

An average particle diameter (D50) of the positive electrode active material according to an exemplary embodiment may be in a range of 1 µm to 10 µm, specifically 1 µm to 5 µm. When the average particle diameter (D50) of the positive electrode active material satisfies the above range, a uniform slurry may be prepared. In the positive electrode of an all-solid-state battery, the electrolyte solution permeates between the positive electrode active material particles like a conventional liquid electrolyte solution of LiB, so that the entire surface of the positive electrode active material is in contact with the electrolyte solution to make it possible to implement high charge/discharge capacity and high output characteristics, together with an almost perfect ionic conductivity network, however, in an all-solid-state battery, since only a contact interface between sulfide solid electrolyte powder particles and the surface of the positive electrode active material particles is a lithium ion channel between the positive electrode active material and the solid electrolyte, it is difficult to implement the same capacity and output characteristics as those of the liquid electrolyte solution even in the case of using the same NCM-based positive electrode active material. Therefore, under the same average particle diameter and content of the solid electrolyte particles, higher capacity may be implemented and higher output characteristics may be secured when the average particle diameter of the positive electrode active material is small. However, a particulate positive electrode active material increases viscosity of a slurry for manufacturing an electrode plate, and a larger amount of a solvent should be used therefor, but when a large amount of an organic solvent is used in the manufacture of a positive electrode plate, a sulfide solid electrolyte vulnerable to the solvent is damaged more seriously by the solvent. In addition, as the average particle diameter is smaller, a combined density of electrode plates (positive electrode active material + binder + conductive material/ positive electrode volume, mg/cm³) is decreased, so that energy density per unit area and unit volume is decreased.

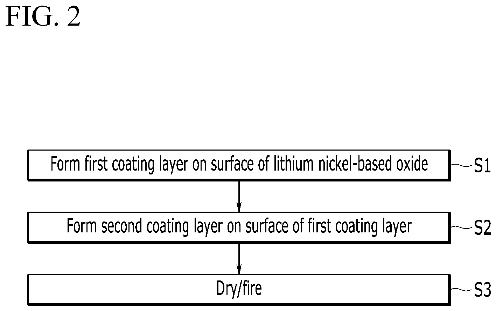

FIG. 2 shows a method of manufacturing a positive electrode active material for an all-solid-state battery according to an exemplary embodiment.

Referring to FIG. 2, a method of manufacturing a positive electrode active material for an all-solid-state battery according to an exemplary embodiment of the present disclosure may include: forming a first coating layer on a surface of a lithium nickel-based oxide (S1), forming a second coating layer on a surface of the first coating layer (S2), and drying and firing.

Hereinafter, the method of manufacturing positive electrode active material for an all-solid-state battery according to an exemplary embodiment will be described in detail step by step.

First, in the forming of a first coating layer on a surface of a lithium nickel-based oxide (S1), an intermediate in which a first coating layer containing cobalt is formed on a surface of a lithium nickel-based oxide may be obtained.

The lithium nickel-based oxide may include a layered lithium nickel-based oxide including one or more of NCM-based oxides, NCA-based oxides, or a combination thereof. The lithium nickel-based oxide may have a nickel content of 75 mol% or more, specifically 80 mol% or more.

The positive electrode active material may be mixed with a cobalt salt aqueous solution and stirred to form a mixed solution in which the lithium nickel-based oxide is uniformly dispersed. The cobalt salt may include one or more of cobalt nitrate, cobalt hydroxide (Co(OH)₂), cobalt oxide (Co₃O₄, CoO, or Co₃O₄-CoO composite), or a combination thereof.

The positive electrode active material may be mixed at a weight ratio in a range of 100:1 to 100:3 with respect to the cobalt salt.

In addition, a concentration of the cobalt salt aqueous solution may be in a range of 0.1 mol/L to 1 mol/L.

The mixed solution in which the NCM, NCA, or NCMA positive electrode active material and the cobalt salt aqueous solution are mixed may be spray dried at a temperature of 100°C or higher. Particles obtained in the spray drying may be heat-treated at a high temperature in a range of 550°C to 750°C, specifically 600°C to 700°C to obtain an intermediate in which the surface of the lithium nickel-based oxide is coated with the first coating layer.

A high temperature heat treatment time may be in a range of 1 hour to 12 hours, specifically 3 hours to 10 hours.

Before mixing the lithium nickel-based oxide with the cobalt salt aqueous solution, a pretreatment of removing residual lithium on the surface of the lithium nickel-based oxide may be performed.

Subsequently, the forming of a second coating layer on a surface of the first coating layer (S2) will be described.

An alcohol solution of a transition metal alkoxide is added to a lithium alcohol solution obtained by dissolving the lithium metal and a transition metal raw material in an anhydrous alcohol, and then stirring is performed for several minutes to several hours to form a coating solution. The transition metal may be one or more of zirconium (Zr), niobium (Nb), or a combination thereof. An intermediate in which a coating layer containing cobalt is formed on the surface of the lithium nickel-based oxide is added to a coating solution formed by mixing the lithium alcohol solution, the alcohol solution (e.g., ethanol, n-propanol, and iso-propanol) of the transition metal alkoxide (e.g., Nb(OCH₂CH₃)₅, Zr(OCH₂CH₂CH₃)₄), and the alcohol solution (e.g., ethanol, n-propanol, and iso-propanol) of a lithium metal, and stirring is performed for a predetermined time to form an intermediate in which the first coating layer is formed and a mixed solution of a second coating solution. Herein, first stirring at a stirring speed in a range of 50 rpm to 200 rpm using a stirrer and then second stirring using a sonicator may be performed. The first stirring and the second stirring may be performed for 10 minutes to 1 hour.

Subsequently, the mixed solution of the lithium nickel-based oxide and the first coating solution may be added to a rotary evaporation concentrator and vacuum dried. Herein, vacuum drying may be performed at a temperature in a range of 30°C to 60°C. In addition, the rotation speed may be in a range of 30 rpm to 80 rpm, specifically 40 rpm to 70 rpm.

In addition, the vacuum drying may be performed for a predetermined time under the conditions of a vacuum degree in a range of 200 torr to 10 torr. In addition, the vacuum drying may be sequentially performed at a vacuum degree having a stepwise vacuum degree gradient. As an example, the vacuum drying may be performed with a gradually lowered vacuum degree to 20 torr, 50 torr, 100 torr, and 200 torr. When the vacuum drying is performed by forming a stepwise vacuum degree gradient as such, a sample which is not completely dried and has a small amount of residual organic solvent may be obtained. When complete drying is performed, a strong aggregate may be formed by agglomeration between particles during solvent drying. The agglomeration may be decreased by recovering the sample before complete drying, performing a post treatment such as sieve filtration, and slowly drying at normal pressure. After the vacuum drying, drying is performed for a predetermined time in a range of (dew point below 40)°C to (dew point below 60)°C to remove a residual solvent, thereby obtaining dry particles. The particles after completing the drying may be heat-treated at a temperature in a range of 200°C to 400°C, specifically 250°C to 350°C, under an oxygen atmosphere in a firing furnace.

Herein, a heat treatment time may be in a range of 1 hour to 4 hours. However, the present disclosure is not limited thereto. By the above heat treatment, the positive electrode active material on which the second coating layer including the coating layer in a range of 0.1 wt% to 2 wt%, specifically 0.5 wt% to 1.5 wt% based on the weight of the positive electrode active material is formed may be manufactured.

### [Examples]

Hereinafter, the examples and the comparative examples of the present disclosure will be described in detail. However, these are suggested only as an example and the present disclosure is not limited thereby, and the present disclosure is only defined by the scope of the claims described later.

### Example 1

First, forming a first coating layer on a nickel-containing oxide was performed. A positive electrode active material having a nickel content of 90 mol was mixed with a cobalt salt aqueous solution and stirred to form a mixed solution in which a lithium nickel-based oxide was uniformly dispersed. The coating solution included one or more of cobalt nitrate, Co(OH)₂, Co₃O₄, CoO, or a combination thereof.

The positive electrode active material was mixed at a weight ratio in a range of 100:1 to 100:3 with respect to the cobalt salt.

In addition, the concentration of the cobalt salt aqueous solution was in a range of 0.1 mol/L to 1 mol/L based on cobalt.

A mixed solution in which the NCM, NCA, or NCMA positive electrode active material and a cobalt salt aqueous solution were mixed was spray dried at a temperature of 100°C or higher. Particles obtained from the spray drying were heat-treated at a high temperature in a range of 550°C to 750°C, specifically 600°C to 700°C to obtain an intermediate in which the surface of the lithium nickel-based oxide was coated with the first coating layer.

The high temperature heat treatment time was in a range of 1 to 12 hours, specifically 3 to 10 hours.

Before mixing the positive electrode active material and the cobalt salt aqueous solution, a pretreatment of removing residual lithium on the surface of the lithium nickel-based oxide was performed.

Thus, the intermediate on which the first coating layer was formed was obtained.

Next, forming of a second coating layer was performed. 0.0136 g of a lithium metal was added to 9.03 g of anhydrous ethanol, and stirring was performed for 30 minutes or more to prepare an ethanol solution of a lithium metal. 0.459 g of a propanol solution of 70 wt% zirconium(IV) tetrapropoxide was added to a prepared ethanol solution of a lithium metal, and stirring was performed for 10 minutes to prepare a coating solution. 15 g of the intermediate on which the first coating layer was formed was added to the prepared coating solution, first stirring was performed at 100 RPM for 20 minutes, and second stirring was performed for 10 minutes using a sonicator. Herein, the chemical formula of the intermediate on which the first coating layer was formed was LiNi_{0.92}Co_{0.04}Mn_{0.04}O₂.

A mixed solution prepared by completing the second stirring was evaporated by making internal pressure 150 Torr at a speed of 50 RPM using a rotary evaporation concentrator, while bathing the mixed solution in water at 50°C, and was completely dried while lowering the pressure to 50 torr and 20 torr stepwisely. The dried powder was second dried at room temperature in a dry room. The second dried powder was heated to 300°C in a firing furnace, and heat-treated for 2 hours in an oxygen atmosphere, thereby manufacturing a positive electrode active material coated with 1 wt% of LZO.

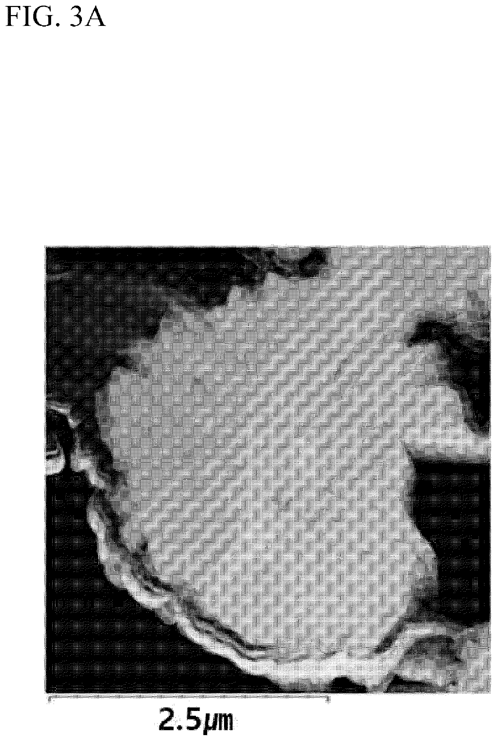

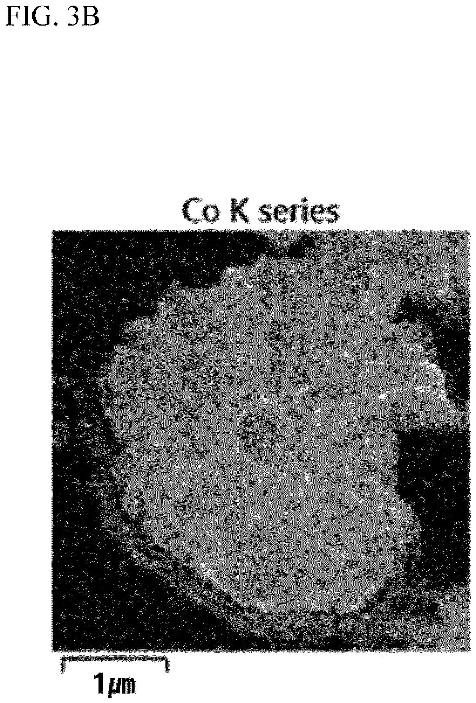

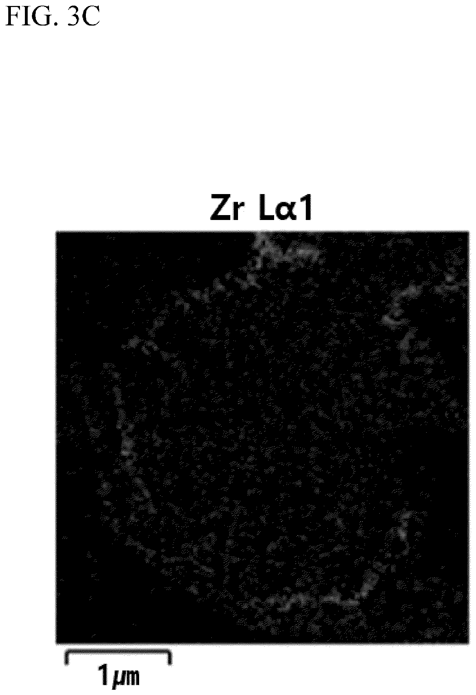

The FE-SEM images of the cross-sections of the positive electrode active material manufactured according to Example 1 are shown in FIGS. 3A to 3C.

Referring to FIGS. 3A to 3C, it was confirmed that the first coating layer including Co was formed and the second coating layer including Nb was formed, on the core.

In addition, as shown in FIGS. 3A to 3C, the thicknesses of the first coating layer and the second coating layer were 1 µm or less.

### Comparative Example 1

A positive electrode active material was manufactured in the same manner as in Example 1, except that a second coating layer was formed using a nickel-containing oxide, without performing forming of a first coating layer on the nickel-containing oxide.

### Comparative Example 2

A nickel-containing oxide was used as a positive electrode active material without forming a first coating layer and a second coating layer.

### Manufacture of all-solid-state battery for evaluation

70 wt% of the prepared positive electrode active material, 29 wt% of an Argyrodite solid electrolyte, and 1 wt% of C65 as a conductive material were mixed to prepare mixed powder. A quantity of the Argyrodite solid electrolyte functioning as a separator was first charged into a jig for evaluating an all-solid-state battery, pressurization was performed to 300 MPa or more so that the thickness was 100 µm, then 10 mg of positive electrode active material mixed powder was added to one surface, and second pressurization was performed, thereby manufacturing a positive electrode section. Thereafter, a Li-In alloy was added to the other surface, and appropriate pressure was imparted, thereby manufacturing a battery for evaluating an all-solid-state battery.

### Evaluation of charge/discharge characteristics of all-solid-state battery for evaluation

The manufactured all-solid-state battery cell for evaluation was mounted in a charger/discharger, and the charge/discharge characteristics were evaluated at 30°C. A charging/discharging method was a constant current-voltage method at a current density of 0.1 C at the first time. A charging terminal voltage was set to 3.7 V, and a charging end current was set to 0.02 C. During discharging, the cell was discharged by a 0.1 C constant current method, and the discharging end voltage was set to 1.9 V. The same protocol was repeated one more, and a current density was increased to 0.3 C for evaluating battery life characteristics to perform long-term cycle evaluation. A charging end voltage during a 0.3 C constant current-voltage method was set to 3.7 V, and a charging end current was set to 0.06 C. A pause time between charge and discharge of each cycle was set to 20 minutes, and a DC-iR value was calculated by dividing a voltage difference between an open circuit voltage (OCV) after 3.7 V constant current-voltage charge completion and resting for 20 minutes and a drop voltage at the point of current application completion at the beginning of discharge by applied current.

The results of evaluating the charge/discharge characteristics of an all-solid-state battery using the positive electrode active materials according to Example 1 and Comparative Examples 1 and 2 are shown in the following Table 1 :

**(Table 1)**

| Classification | First-cycle charge and discharge | | | Discharge capacity of 0.3 C (mAh/g) | Discharge capacity of 0.3 C/0.1 C (%) | Cycle Retention (%, 20 times) |
|---|---|---|---|---|---|---|
| | Charge capacity (mAh/g) | Discharge capacity (mAh/g) | Initial efficiency (%) | | | |
| Example 1 | 213.9 | 192.1 | 89.8 | 173.5 | 90.3 | 94.6 |
| Comparative Example 1 | 201.6 | 181.0 | 89.8 | 162.5 | 89.8 | 91.9 |
| Comparative Example 2 | 223.6 | 179.6 | 80.3 | 152.7 | 85.0 | 84.6 |

Referring to Table 1, it was confirmed that the initial capacity and capacity retention properties of the all-solid-state battery according to Example 1 were better than those of Comparative Examples 1 and 2.

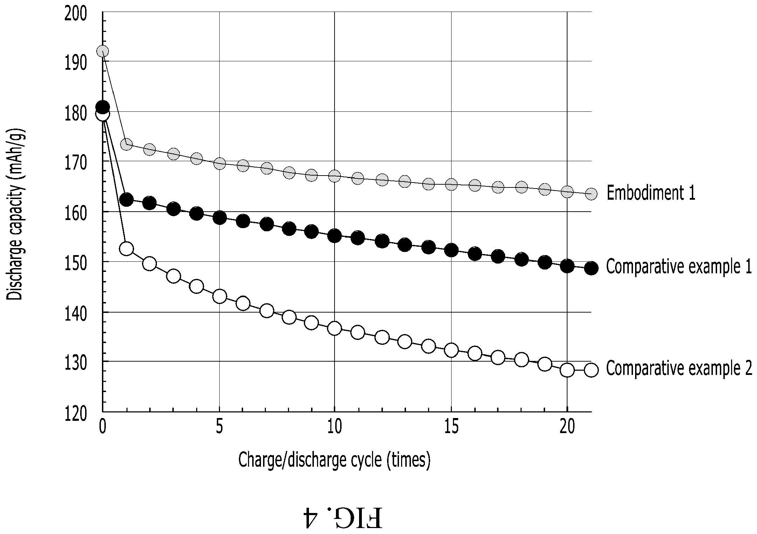

FIG. 4 is a graph showing cycle life characteristics at room temperature of the all-solid-state batteries according to Example 1 and Comparative Examples 1 and 2.

Referring to FIG. 4, it was confirmed that the cycle efficiency of the all-solid-state battery according to Example 1 was better than that of Comparative Examples 1 and 2, and also, a decrease as cycle increased was smaller than that of Comparative Examples 1 and 2.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

## Claims

1. A positive electrode active material for an all-solid-state battery comprising:
a core including a lithium nickel-based oxide;
a first coating layer containing cobalt which is placed on a surface of the core; and
a second coating layer containing a lithium transition metal oxide which is placed on a surface of the first coating layer.

2. The positive electrode active material for an all-solid-state battery of claim 1, wherein:
the core including a lithium nickel-based oxide is
a NCM-based or NCA-based layered lithium nickel-based oxide.

3. The positive electrode active material for an all-solid-state battery of claim 1, wherein:
a cobalt content in the first coating layer is in a range of 0.5 wt% to 5 wt%.

4. The positive electrode active material for an all-solid-state battery of claim 1, wherein:
a weight ratio of the first coating layer to the core is
in a range of 100:0.5 to 100:5.

5. The positive electrode active material for an all-solid-state battery of claim 1, wherein:
the first coating layer has a thickness in a range of 0.005 µm to 0.05 µm.

6. The positive electrode active material for an all-solid-state battery of claim 1, wherein:
the second coating layer includes a lithium oxide including one or more of zirconium, niobium, or a combination thereof.

7. The positive electrode active material for an all-solid-state battery of claim 1, wherein:
the second coating layer is included
in a range of 0.1 wt% to 2 wt based on the weight of the positive electrode active material.

8. The positive electrode active material for an all-solid-state battery of claim 1, wherein:
the second coating layer has a thickness in a range of 0.005 µm to 0.05 µm.

9. A method of manufacturing a positive electrode active material for an all-solid-state battery, the method comprising:
obtaining an intermediate in which a surface of a lithium nickel-based oxide is coated with a first coating layer containing cobalt;
coating a surface of the intermediate with a second coating layer containing a lithium transition metal oxide to obtain a product; and
vacuum drying and then firing the product to obtain a positive electrode active material.

10. The method of manufacturing a positive electrode active material for an all-solid-state battery of claim 9, wherein:
in the obtaining of an intermediate in which a first coating layer containing cobalt is formed on a surface of a lithium nickel-based oxide,
a mixed solution of a dispersion in which the lithium nickel-based oxide is dispersed in water and a cobalt salt aqueous solution is spray dried,
thereby obtaining an intermediate on which the first coating layer containing cobalt is formed.

11. The method of manufacturing a positive electrode active material for an all-solid-state battery of claim 10, wherein:
the cobalt salt includes one or more of cobalt nitrate, cobalt hydroxide, cobalt oxide, or a combination thereof.

12. The method of manufacturing a positive electrode active material for an all-solid-state battery of claim 9, wherein:
in the forming of a second coating layer containing a lithium transition metal oxide on a surface of the intermediate to obtain a product,
the lithium transition metal oxide includes a lithium oxide including one or more of zirconium, niobium, or a combination thereof.

13. The method of manufacturing a positive electrode active material for an all-solid-state battery of claim 9, wherein:
the vacuum drying and then firing of the product to obtain a positive electrode active material
includes vacuum drying and drying at normal pressure.

14. The method of manufacturing a positive electrode active material for an all-solid-state battery of claim 13, wherein:
the vacuum drying is
performed at two or more vacuum degrees having a stepwise vacuum degree gradient.

15. The method of manufacturing a positive electrode active material for an all-solid-state battery of claim 14, wherein:
the vacuum drying is
performed at a vacuum degree in a range of 200 torr to 10 torr.
